(19) **Europäisches Patentamt**

**European Patent Office**

**Office européen des brevets**

(11) **EP 0 775 574 B1**

(12) **EUROPÄISCHE PATENTSCHRIFT**

(45) Veröffentlichungstag und Bekanntmachung des Hinweises auf die Patenterteilung:
**02.07.2003 Patentblatt 2003/27**

(51) Int Cl.$^7$: **B32B 27/32**

(21) Anmeldenummer: **96118173.2**

(22) Anmeldetag: **13.11.1996**

(54) **Niedrig siegelnde, biaxial orientierte Polyolefin-Mehrschichtfolie, Verfahren zu ihrer Herstellung und ihre Verwendung**

Biaxially oriented polyolefin multilayer film, process for its manufacture and its use

Feuille stratifiée en polyoléfine orientée biaxialement, scellable à basse température, procédé pour sa fabrication et son utilisation

(84) Benannte Vertragsstaaten:
**BE DE ES FI FR GB IE IT NL**

(30) Priorität: **23.11.1995 DE 19543679**

(43) Veröffentlichungstag der Anmeldung:
**28.05.1997 Patentblatt 1997/22**

(73) Patentinhaber: **Trespaphan GmbH 66539 Neunkirchen (DE)**

(72) Erfinder:
• **Lohmann, Harald DI.
66539 Neunkirchen (DE)**
• **Peiffer, Herbert, Dr.
55126 Mainz (DE)**
• **Busch, Detlef DI.
66740 Saarlouis (DE)**

(74) Vertreter: **Luderschmidt, Schüler & Partner GbR Patentanwälte,
Postfach 3929
65029 Wiesbaden (DE)**

(56) Entgegenhaltungen:
**EP-A- 0 571 682    EP-A- 0 578 149
WO-A-93/25375**

**Beschreibung**

Die Erfindung betrifft eine polyolefinische Mehrschichtfolie mit mindestens drei Schichten BZD, wobei B eine polyolefinische Basisschicht, Z eine Zwischenschicht und D eine auf der Zwischenschicht aufgebrachte Deckschicht ist. Die Erfindung betrifft ferner die Verwendung dieser Folie und ein Verfahren zu ihrer Herstellung.

Die immer schneller laufenden Verpackungsmaschinen erfordern ebenso wie empfindliche Füllgüter (Lebensmittel, Schokolade, Gebäck) Folien mit einer niedrigen Siegelanspringtemperatur in Kombination mit einem optimalen Maschinenlaufverhalten. Im Stand der Technik sind Folien bekannt, welche Siegelanspringtemperaturen unter 100 °C, teilweise sogar bis hinunter zu 74 °C, aufweisen. Diese Folien besitzen jedoch große Nachteile bei ihrer Herstellung.

EP-A-0 114 311 und EP-A-0 114 312 beschreiben opake und transparente Polypropylenfolien mit einer Siegelanspringtemperatur (Mindestsiegeltemperatur) von unter 100 °C und mit guter Maschinengängigkeit. Diese Folien weisen eine Deckschicht aus einer Mischung aus $C_2/C_3/C_4$-Terpolymer und $C_3/C_4$-Copolymer sowie ein niedrigmolekulares Harz, Polypropylenhomopolymer und Polydiorganosiloxan auf. Nach dieser Lehre wird der große Siegelbereich der Folie und die niedrige Siegelanspringtemperatur durch die Olefinharzzusammensetzung aus Co- und Terpolymer erzielt. Die Einarbeitung von Kohlenwasserstoffharzen in die Deckschicht führt zu Harzablagerungen an den Streckwalzen bei der Herstellung. Durch diese Ablagerungen kommt es zur Streifenbildung auf der Folie. Zur Vermeidung der Streifen müssen die Walzen häufig gereinigt werden.

Die EP-A-0 184 094 und EP-A-0 187 253 beschreiben transparente und opake Polypropylenfolien, die eine siegelfähige Oberflächenschicht mit einer Siegelanspringtemperatur von kleiner oder gleich 100 °C und eine zweite Oberflächenschicht aufweisen, die nicht siegelfähig ist. Die minimale Siegelanspringtemperatur von unterhalb 100 °C wird durch die Olefinharzzusammensetzung aus $C_3/C_4$- Copolymeren und $C_2/C_3/C_4$-Terpolymeren erzielt.

Die EP-A-0 480 282 beschreibt eine beidseitig niedrig siegelnde biaxial orientierte Polyolefin-Mehrschichtfolie, deren Basisschicht ein peroxidisch abgebautes Propylenhomopolymerisat enthält und deren Deckschichten Mischungen aus $C_2/C_3/C_4$-Terpolymer und $C_2/C_3$-Copolymer sowie eine Kombination von $SiO_2$ und Polydialkylsiloxan enthalten. Das Polydialkylsiloxan ist hochviskos und wird in Form eines Masterbatches zugegeben. Die Siegelanspringtemperatur beträgt 88 °C.

Die EP-A-0 578 149 beschreibt eine niedrig siegelnde, transparente, coextrudierte Polyolefin-Mehrschichtfolie mit definierten Längs- und Querschrumpfwerten, deren Deckschichten eine Siegelanspringtemperatur von 124°C, vorzugsweise von 80 bis 110°C aufweist/aufweisen.

Die EP-A-0 611 647 beschreibt Mehrschichtfolien mit mindestens einer niedrig siegelnden Deckschicht. Die Deckschicht enthält eine niedrig kristalline $C_3/C_4$-Olefinharzzusammensetzung und weist eine Siegelanspringtemperatur von kleiner 84 °C auf.

Folien mit den beschriebenen niedrig siegelnden Deckschichten neigen bei erhöhter Temperatur stark zum Verkleben mit sich selbst und mit heißen Maschinenteilen wie z.B. Streckwalzen der Längsstreckung oder Kluppenketten der Querstreckung. Die Herstellung solcher Folien ist daher äußerst problematisch. Durch die hohe Klebeneigung der Folie ist die Tendenz zu Folienabrissen besonders hoch. Bei Folienabrissen in der Längsstreckung führt die Verklebung der Folienbahn mit sich selbst oder mit den Streckwalzen dazu, daß sich die Folie um die Walzen wickelt und diese verbiegt und beschädigt. Bei Abrissen in der Querstreckung bleiben Folienstücke in den Kluppenketten kleben und müssen unter großem Aufwand aus dem Rahmen entfernt werden. Dies ist mit großen Stillstandzeiten verbunden. Weiterhin entsteht bei Folienabrissen eine erhöhte Unfallgefahr durch Verkleben der noch warmen Folienbahn mit sich selbst. Die Folienbahn legt sich wie eine Ziehharmonika zusammen und verklebt zu einem größeren Strang, der sich nur unter großer Anstrengung aus der Maschine entfernen läßt.

Der Erfindung liegt daher die Aufgabe zugrunde, eine Mehrschichtfolie zur Verfügung zu stellen, welche gute Siegeleigenschaften besitzt, d. h. insbesondere eine niedrige Siegelanspringtemperatur aufweist, um auch für wärmeempfindliche Verpackungsgüter und auf schnellaufenden Verpackungsmaschinen einsetzbar zu sein. Die Folie soll bei der Herstellung nicht mit sich selbst und den erwärmten Maschinenteilen verkleben und problemlos bei der Herstellung laufen. Die Folie darf ebenso wenig mit sich selbst verkleben, wenn Folienabrisse auftreten.

Erfindungsgemäß wird diese Aufgabe gelöst durch eine Folie der eingangs genannten Gattung, deren kennzeichnende Merkmale darin bestehen, daß die Zwischenschicht Z mindestens 75 Gew.-%, bezogen auf die Zwischenschicht Z, siegelfähige Polyolefine und die Deckschicht D mindestens 75 Gew.-%, bezogen auf die Deckschicht D, siegelfähige Polyolefine enthält, wobei die Mindestsiegeltemperatur (Siegelanspringtemperatur) der Deckschicht D mindestens 100 °C beträgt und größer als die Mindestsiegeltemperatur der Zwischenschicht Z ist und die Dicke der Deckschicht D kleiner als 0,4 µm ist.

Überraschenderweise führen die beiden aufeinanderliegenden Siegelschichten, deren Mindestsiegeltemperaturen in der angegebenen Weise aufeinander abgestimmt sind, zu einer Folie, welche gegenüber dem Stand der Technik verbessert ist. Diese Folie verklebt nicht mehr mit sich selbst, mit beheizten Walzen oder mit der heißen umlaufenden Kluppenkette des Querstreckrahmens. Die Herstellung der Folie ist daher gegenüber Folie nach dem beschriebenen Stand der Technik weitgehend unproblematisch.

Überraschender Weise hat sich durch das Aufbringen der dünnen und höher siegelnden Deckschicht auf die niedrigsiegelnde Zwischenschicht das Verarbeitungsverhalten der erfindungsgemäßen Folie gegenüber Folie nach dem Stand der Technik nicht geändert. Die Folie hat noch immer eine sehr niedrige Siegelanspringtemperatur und kann weiterhin in solchen Einsatzgebieten verwendet werden, bei denen die vorteilhafte niedrige Siegelanspringtemperatur des Polyolefins der Zwischenschicht und alle damit verbundenen Vorteile zum Tragen kommen. Überraschender Weise hat sich gezeigt, daß bei solchen Anwendungen, wo die Siegelung der Folie mittels geriffelten Siegelbacken erfolgt, die gleichen Siegeltemperaturten gewählt werden können, wie in dem Fall, wo die dünnen Deckschichten fehlen. Offensichtlich wird durch die Riffelung der Siegelbacken die dünne Deckschicht aufgebrochen, wodurch die Siegeleigenschaften der darunterliegenden Schicht voll zum Tragen kommen.

Die Basisschicht der erfindungsgemäßen Mehrschichtfolie enthält Polyolefine, vorzugsweise Propylenpolymere, und gegebenenfalls weitere zugesetzte Additive in jeweils wirksamen Mengen. Im allgemeinen enthält die Basisschicht mindestens 50 Gew.-%, vorzugsweise 75 bis 100 Gew.-%, insbesondere 90 bis 98 Gew.-%, der Propylenpolymeren, jeweils bezogen auf die Basisschicht.

Das Propylenpolymere enthält im allgemeinen 90 bis 100 Gew.-%, vorzugsweise 95 bis 100 Gew.-%, insbesondere 98 bis 100 Gew.-%, Propyleneinheiten und besitzt im allgemeinen einen Schmelzpunkt von 120 °C oder höher, vorzugsweise 150 bis 170 °C, und im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735). Isotaktisches Propylenhomopolymer mit einem ataktischen Anteil von 15 Gew.-% und weniger, Copolymere von Ethylen und Propylen mit einem Ethylengehalt von 10 Gew.-% oder weniger, Copolymere von Propylen mit $C_4$-$C_8$-$\alpha$-Olefinen mit einem $\alpha$-Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Basisschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE und LLDPE, wobei der Anteil dieser Polyolefine jeweils 15 Gew.-%, bezogen auf die Polymermischung, nicht übersteigt.

In einer bevorzugten Ausführungsform der erfindungsgemäßen Folie wird das Propylenpolymere der Basisschicht peroxidisch abgebaut.

Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

MFI$_1$ =    Schmelzflußindex des Propylenpolymeren vor dem Zusatz des organischen Peroxids

MFI$_2$ =    Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10. Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Im allgemeinen kann die Basisschicht Stabilisatoren und Neutralisationsmittel in jeweils wirksamen Mengen sowie gegebenenfalls Gleitmittel, Antistatika und/oder Kohlenwasserstoffharz enthalten.

In einer weißen oder opaken bzw. weiß/opaken Ausführungsform enthält die Basisschicht zusätzlich Pigmente oder vakuoleniniziierende Teilchen bzw. eine Kombination aus diesen. Solche Folien haben eine Lichtdurchlässigkeit nach ASTM-D 1033-77 von höchstens 50 %, vorzugsweise von höchstens 70 %.

Pigmente umfassen solche Teilchen, die im wesentlichen nicht zur Vakuolenbildung beim Verstrecken führen. Die färbende Wirkung der Pigmente wird durch die Teilchen selbst verursacht. Der Begriff "Pigment" ist im allgemeinen an eine Teilchengröße von 0,01 bis maximal 1 μm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 μm, vorzugsweise 0,01 bis 0,7 μm, insbesondere 0,01 bis 0,4 μm. Die Basisschicht enthält Pigmente im allgemeinen in einer Menge von 1 bis 25 Gew.-%, insbesondere 2 bis 20 Gew.-%, bevorzugt 5 bis 15 Gew.-%, jeweils bezogen auf die Basisschicht.

Übliche Pigmente sind Materialien wie z. B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen zu mindestens 95 Gew.-% aus Rutil und werden bevorzugt mit einem Überzug aus anorganischen Oxiden eingesetzt, wie er üblicherweise als Überzug für $TiO_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. $TiO_2$-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den $TiO_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, jeweils bezogen auf 100 g $TiO_2$-Teilchen, enthalten. Als besonders vorteilhaft hat es sich erwiesen, wenn die $TiO_2$-Teilchen mit $Al_2O_3$ oder mit $Al_2O_3$ und Polydimethylsiloxan beschichtet sind.

Opake Ausführungsformen der Folien enthalten vakuoleniniziierende Teilchen, welche mit der Polymermatrix unverträglich sind und beim Verstrecken der Folien zur Bildung von vakuolenartigen Hohlräumen führen, wobei Größe, Art und Anzahl der Vakuolen vom Material und von der Größe der festen Teilchen und den Streckbedingungen wie Streckverhältnis und Strecktemperatur abhängig sind. Die Vakuolen geben den Folien ein charakteristisches perlmuttartiges, opakes Aussehen, welches durch Lichtstreuung an den Grenzflächen Vakuole/Polymermatrix entsteht. Im allgemeinen beträgt der mittlere Teilchendurchmesser der vakuoleniniziierenden Teilchen 1 bis 6 µm, vorzugsweise 1,5 bis 5 µm. Die Basisschicht enthält vakuoleniniziierende Teilchen im allgemeinen in einer Menge von 1 bis 25 Gew.-%, bezogen auf das Gewicht der Basisschicht.

Übliche vakuoleniniziierende Teilchen der Basisschicht sind anorganische und/oder organische, mit Polypropylen unverträgliche Materialien wie- Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Calciumcarbonat, Siliciumdioxid und Titandioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Polyester, Polystyrole, Polyamide, halogenierte organische Polymere, wobei Polyester wie beispielsweise Polybutylenoder Polyethylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Weiß/opake Folien, welche mit vakuoleniniziierenden Teilchen und mit Pigment ausgerüstet sind, enthalten die vakuoleniniziierenden Teilchen in einer Menge von 1 bis 10 Gew.-%, bevorzugt 1 bis 5 Gew.-%, und Pigment in einer Menge von 1 bis 7 Gew.-%, bevorzugt 1 bis 5 Gew.-%, jeweils bezogen auf das Gewicht der Basisschicht.

Die Dichte der opaken bzw. weißen Folien kann innerhalb weiter Grenzen variieren und hängt von der Art und der Menge der Füllstoffe ab. Die Dichte liegt im allgemeinen im Bereich von 0,4 bis 1,1 $g/cm^3$. Pigmentierte Folien haben eine Dichte in der Größenordnung von 0,9 $g/cm^3$ oder darüber, vorzugsweise im Bereich von 0,9 bis 1,1 $g/cm^3$. Folien, welche nur vakuoleniniziierende Teilchen enthalten, haben eine Dichte von kleiner 0,9 $g/cm^3$. Für Verpackungsfolien mit einem Gehalt an vakuoleniniziierenden Teilchen von 2 bis 5 Gew.-% liegt die Dichte im Bereich von 0,6 bis 0,85 $g/cm^3$. Für Folien mit einem Gehalt an vakuoleniniziierenden Teilchen von 5 bis 14 Gew.-% liegt die Dichte im Bereich von 0,4 bis 0,8 $g/cm^3$. Folien, welche Pigmente und vakuoleniniziierende Teilchen enthalten, haben eine Dichte im Bereich von 0,5 bis 0,85 $g/cm^3$, je nach Verhältnis von Pigmentgehalt zu Gehalt an vakuoleniniziierenden Teilchen.

Erfindungsgemäß umfaßt die Mehrschichtfolie mindestens eine Zwischenschicht, welche im allgemeinen auf mindestens einer Oberfläche der Basisschicht aufgebracht ist. Diese Zwischenschicht enthält 75 bis 100 Gew.-%, vorzugsweise 90 bis 100 Gew.-%, insbesondere 95 bis 100 Gew.-%, jeweils bezogen auf die Zwischenschicht, siegelfähige Polymere aus Olefinen mit 2 bis 10 Kohlenstoffatomen sowie gegebenenfalls Additive in jeweils wirksamen Mengen. Die Mindestsiegeltemperatur dieser siegelfähigen Polyolefine der Zwischenschicht ist kleiner als die Mindestsiegeltemperatur des Polyolefins der Deckschicht. Die Mindestsiegeltemperatur des Polymers der Zwischenschicht liegt unterhalb 100°C, vorzugsweise unterhalb von 90°C und ganz bevorzugt im Bereich von 65 - 80 °C.

Beispiele für derartige siegelfähige olefinische Polymere mit niedriger Siegelanspringtemperatur sind

ein Copolymer von

Ethylen und Propylen oder
Ethylen und Butylen-1 oder
Propylen und Butylen-1 oder

ein Terpolymer von

Ethylen und Propylen und Butylen-1 oder

eine Mischung oder ein Blend aus zwei oder mehreren der genannten Cound Terpolymeren, gegebenenfalls gemischt mit einem oder mehreren der genannten Co- und Terpolymeren,

wobei insbesondere statistische Ethylen-Propylen-Copolymere mit

einem Ethylengehalt von 1 bis 10 Gew.-%, bevorzugt 2,5 bis 8 Gew.-%, oder

statistische Propylen-Butylen-1-Copolymere mit

einem Butylengehalt von 2 bis 25 Gew.-%, bevorzugt 4 bis 20 Gew.-%,

jeweils bezogen auf das Gesamtgewicht des Copolymeren, oder

statistische Ethylen-Propylen-Butylen-1-Terpolymere mit

einem Ethylengehalt von 1 bis 10 Gew.-%, bevorzugt 2 bis 6 Gew.-%, und

einem Butylen-1-Gehalt von 2 bis 20 Gew.-%, bevorzugt 4 bis 20 Gew.-%,

jeweils bezogen auf das Gesamtgewicht des Terpolymeren, oder ein Blend aus einem Ethylen-Propylen-Butylen-1-Terpolymeren und einem Propylen-Butylen-1-Copolymeren

mit einem Ethylengehalt von 0,1 bis 7 Gew.-%

und einem Propylengehalt von 50 bis 90 Gew.-%

und einem Butylen-1-Gehalt von 10 bis 40 Gew.-%,

jeweils bezogen auf das Gesamtgewicht des Polymerblends, bevorzugt sind.

Die vorstehend beschriebenen Co- und Terpolymeren weisen im allgemeinen einen Schmelzflußindex von 1,5 bis 30 g/10 min, vorzugsweise von 3 bis 15 g/10 min, auf. Das vorstehend beschriebene Blend aus Co- und Terpolymeren hat im allgemeinen einen Schmelzflußindex von 5 bis 9 g/10 min. Die angegebenen Schmelzflußindices werden bei 230 °C und einer Kraft von 21,6 N (DIN 53 735) gemessen.

Unter den vorstehend beschriebenen Polyolefinen sind die siegelfähigen Propylenpolymeren bevorzugt, deren Propylengehalt mindestens 70 Gew.-%, vorzugsweise 75 -98 Gew.-% bezogen auf das Propylenpolymere beträgt. Als Comonomere sind Ethylen und Butylen bevorzugt.

Gegebenenfalls können alle vorstehend beschriebenen Zwischenschichtpolymeren in der gleichen Weise wie vorstehend für die Basisschicht beschrieben peroxidisch abgebaut sein, wobei grundsätzlich die gleichen Peroxide verwendet werden. Der Abbaufaktor für die Zwischenschichtpolymeren liegt im allgemeinen in einem Bereich von 3 bis 15, vorzugsweise 6 bis 10.

In einer bevorzugten Ausführungsform enthält die Zwischenschicht Stabilisatoren und Neutralisationsmittel sowie gegebenenfalls Antiblockmittel, Gleitmittel, Kohlenwasserstoffharze und/oder Antistatika in jeweils wirksamen Mengen. Der Zusatz von Stabilisatoren, Neutralisationsmitteln und Antiblockmitteln ist bevorzugt.

Die erfindungsgemäße Polyolefinfolie umfaßt mindestens eine siegelfähige Deckschicht, welche auf der vorstehend beschriebenen Zwischenschicht aufgebracht ist. Diese Deckschicht enthält 75 bis 100 Gew.-%, vorzugsweise 90 bis 100 Gew.-%, insbesondere 100 Gew.-%, jeweils bezogen auf die Deckschicht, siegelfähige Polymere aus Olefinen mit 2 bis 10 Kohlenstoffatomen und gegebenenfalls Additive in jeweils wirksamen Mengen. Die Mindestsiegeltemperatur der siegelfähigen Polyolefine beträgt mindestens 100 °C und ist größer als die Mindestsiegeltemperatur des Polyolefins der Zwischenschicht. Die Mindestsiegeltemperatur des Deckschichtpolymeren beträgt erfindungsgemäß mindestens 100 °C, vorzugsweise 100 bis 150 °C, insbesondere 120 bis 140 °C.

Beispiele für derartige siegelfähige olefinische Polymere sind

ein Copolymer von

Ethylen und Propylen oder

Ethylen und Butylen-1 oder

Propylen und Butylen-1 oder

ein Terpolymer von

Ethylen und Propylen und Butylen-1 oder

eine Mischung oder ein Blend aus zwei oder mehreren der genannten Cound Terpolymeren, gegebenenfalls gemischt mit einem oder mehreren der genannten Co- und Terpolymeren,

wobei insbesondere statistische Ethylen-Propylen-Copolymere mit

einem Ethylengehalt von 1 bis 10 Gew.-%, bevorzugt 2,5 bis 8 Gew.-%, oder

statistische Propylen-Butylen-1-Copolymere mit

einem Butylengehalt von 2 bis 25 Gew.-%, bevorzugt 4 bis 20 Gew.-%,

jeweils bezogen auf das Gesamtgewicht des Copolymeren, oder

statistische Ethylen-Propylen-Butylen-1-Terpolymere mit

einem Ethylengehalt von 1 bis 10 Gew.-%, bevorzugt 2 bis 6 Gew.-%, und

einem Butylen-1-Gehalt von 2 bis 20 Gew.-%, bevorzugt 4 bis 20 Gew.-%,

jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

Die vorstehend beschriebenen Co- und Terpolymeren weisen im allgemeinen einen Schmelzflußindex von 1,5 bis 30 g/10 min, vorzugsweise von 3 bis 15 g/10 min, auf. Das vorstehend beschriebene Blend aus Co- und Terpolymeren hat im allgemeinen einen Schmelzflußindex von 5 bis 9 g/10 min. Alle angegebenen Schmelzflußindices werden bei 230 °C und einer Kraft von 21,6 N (DIN 53 735) gemessen.

Unter den vorstehend beschriebenen Polyolefinen sind die siegelfähigen Propylenpolymeren bevorzugt, deren Propylengehalt mindestens 70 Gew.-%, vorzugsweise 75 - 98 Gew.-% bezogen auf das Propylenpolymere beträgt. Als Comonomere sind Ethylen und Butylen bevorzugt.

Gegebenenfalls können alle vorstehend beschriebenen Deckschichtpolymeren in der gleichen Weise wie vorstehend für die Basisschicht beschrieben peroxidisch abgebaut sein, wobei grundsätzlich die gleichen Peroxide verwendet werden. Der Abbaufaktor für die Deckschichtpolymeren liegt im allgemeinen in einem Bereich von 3 bis 15, vorzugsweise 6 bis 10.

In einer bevorzugten Ausführungsform enthält die Deckschicht Stabilisatoren und Neutralisationsmittel sowie gegebenenfalls Gleitmittel in jeweils wirksamen Mengen.

Die erfindungsgemäße Mehrschichtfolie umfaßt die vorstehend beschriebene Basis- und Zwischenschicht und eine Deckschicht sowie gegebenenfalls weitere Schichten. Bevorzugt sind vierschichtige Ausführungsformen, welche auf beiden Seiten eine Deckschicht aufweisen, welche bezüglich ihrer Dicke und Zusammensetzung gleich oder verschieden sein können. Daneben sind fünfschichtige Ausführungsformen bevorzugt, welche eine Basisschicht und auf beiden Seiten der Basisschicht aufgebrachte Zwischenschichten und beidseitige Deckschichten aufweisen. Diese Folien können symmetrisch aufgebaut sein, d. h. mit den gleichen Zwischen- und Deckschichten auf beiden Seiten. Gegebenenfalls können sich beidseitige Zwischenschichten bzw. Deckschichten auch voneinander unterscheiden. Weiterhin sind sechs- und siebenschichtige Folien von großem Vorteil, welche auf der Basis einseitig oder beidseitige zusätzliche Zwischenschichten aufweisen. Die sechsschichtige Folie ist unsymmetrisch aufgebaut, bei der siebenschichtigen Folie bietet sich vorteilhaft ein symmetrischer Aufbau an.

Die Gesamtdicke der erfindungsgemäßen Polyolefin-Mehrschichtfolie kann innerhalb weiter Grenzen variieren und richtet sich nach dem beabsichtigten Einsatz. Sie beträgt vorzugsweise 3 bis 150 µm, insbesondere 5 bis 120 µm, wobei die Basisschicht etwa 30 bis 90 % der Gesamtfoliendicke ausmacht.

Die Dicke der erfindungswesentlichen siegelfähigen Deckschicht beträgt weniger als 0,4 µm und liegt vorzugsweise im Bereich unterhalb von 0,3 µm, insbesondere im Bereich von 0,05 bis 0,2 µm. Es hat sich gezeigt, daß der günstige Einfluß der Zwischenschicht auf die Siegeleigenschaften umso effektiver wird, je dünner die darauf aufgebrachte Deckschicht ist. Bei Deckschichten von kleiner als 0,4 µm zeigt die Folie nahezu das gleiche Verarbeitungsverhalten wie eine entsprechende Folie ohne diese Deckschicht. Überraschenderweise reicht die dünne Schicht mit der höheren Mindestsiegeltemperatur bei der Herstellung der Folie dazu aus, das Verkleben der Folie mit sich selbst, mit Walzen oder anderen heißen Maschinenteilen wirkungsvoll zu vermindern. Wenn die Deckschichtdicke 0,4 µm überschreitet treten auch keine Probleme durch Verkleben der Folie auf, aber die Siegelanspringtemperatur erhöht sich, so daß nicht mehr das Siegelverhalten der Zwischenschicht bestimmend ist.

Erfindungsgemäß ist die Siegelanspringtemperatur des Polyolefins der Deckschicht höher als die Siegelanspringtemperatur des Polyolefins der Zwischenschicht. Vorzugsweise unterscheiden sich die Siegelanspringtemperaturen der Polymeren um mindestens mehr als 15°C, insbesondere um 20-50°C, besonders bevorzugt um 25-35°C. Die Siegelanspringtemperatur eines Polymers ist im Sinne der vorliegenden Erfindung diejenige Anspringtemperatur die an einer Vergleichsfolie gemessen wird, welche beidseitig Deckschichten von 0,7 µm Dicke aus dem zu prüfenden Polymeren aufweist. Basisschicht und Herstellverfahren dieser Vergleichsfolie sind analog der entsprechenden erfindungsgemäßen Ausführungsform mit Zwischenschicht und Deckschicht aus den beiden siegelfähigen Polymeren.

Die optionale Deckschicht auf der gegenüberliegenden Seite kann aus nicht siegelnden Polyolefinen sowie aus siegelfähigen Polyolefinen aufgebaut sein. Als Polyolefine sind insbesondere diejenigen geeignet, welche als Polyolefine für die Basisschicht beschrieben wurden. Weiterhin sind die siegelfähigen Polymeren, welche für die Zwischenschicht und für die Deckschicht beschrieben wurden, besonders geeignet. Die Dicke dieser weiteren Deckschicht beträgt im allgemeinen 0,1 bis 5 µm, vorzugsweise 0,5 bis 2 µm.

Die Dicke der erfindungswesentlichen Zwischenschicht beträgt im allgemeinen 0,2 bis 10 µm, wobei Zwischenschichtdicken von 0,5 bis 5 µm, insbesondere 1 bis 2 µm, bevorzugt sind.

Wie bereits für die jeweiligen Schichten angegeben kann die erfindungsgemäße Mehrschichtfolie in einer oder mehreren Schichten Neutralisationsmittel, Stabilisatoren, Gleitmittel, Antiblockmittel, Kohlenwasserstoffharze und/oder Antistatika enthalten. Die nachstehenden Angaben in Gewichtsprozent beziehen sich auf das Gewicht der jeweiligen Schicht, der das Additiv zugesetzt ist.

Neutralisationsmittel sind vorzugsweise Dihydrotalcit, Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m$^2$/g. Im allgemeinen wird das Neutralisationsmittel in einer Menge von 0,02 bis 0,1 Gew.-% zugesetzt.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Aikali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,5 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Kohlenwasserstoffharze sind niedermolekulare Polymere, deren mittleres Molekulargewicht $M_w$ im allgemeinen in einem Bereich von 300 bis 8 000, vorzugsweise 400 bis 5 000, vorzugsweise 500 bis 2 000, liegt. Damit ist das mittlere Molekulargewicht $M_w$ der Harze deutlich niedriger als das der Propylenpolymeren, welche die Hauptkomponente der einzelnen Folienschichten bilden und im allgemeinen ein mittleres Molekulargewicht $M_w$ von über 100 000 haben. Die Kohlenwasserstoffharze werden bevorzugt der Basisschicht und/oder der/den Zwischenschicht/en zugesetzt. Die wirksame Menge an niedrigmolekularem Harz beträgt 1 bis 20 Gew.-%, vorzugsweise 2 bis 10 Gew.-%, bezogen auf die Schicht.

Bei dem empfohlenen niedrigmolekularen Harz handelt es sich um ein natürliches oder synthetisches Harz mit einem Erweichungspunkt von 60 bis 180 °C, vorzugsweise 80 bis 150 °C, bestimmt nach ASTM E-28. Unter den zahlreichen niedrigmolekularen Harzen sind die Kohlenwasserstoffharze bevorzugt, und zwar in Form der Erdölharze (Petroleumharz), Styrolharze, Cyclopentadienharze und Terpenharze (diese Harze sind in Ullmanns Encyklopädie der technischen Chemie, 4. Auflage, Band 12, Seiten 525 bis 555, beschrieben). Geeignete Erdölharze sind in zahlreichen Schriften beschrieben wie beispielsweise EP-A-0 180 087, auf die hier ausdrücklich Bezug genommen wird.

Bevorzugte Antistatika sind Alkalialkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-$(C_1-C_4)$-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 3 Gew.-%. Als Antistatikum ist weiterhin Glycerinmonostearat bevorzugt.

Die Erfindung betrifft weiterhin ein Verfahren zur Herstellung der erfindungsgemäßen Mehrschichtfolie nach dem an sich bekannten Coextrusionsverfahren.

Im Rahmen dieses Verfahrens wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können oder via Masterbatch-Technik zugegeben werden. Die den einzelnen Schichten der Folie entsprechenden Schmelzen werden dann gleichzeitig durch eine Flachdüse (Breitschlitzdüse) coextrudiert, und die ausgepreßte mehrschichtige Folie wird auf einer oder mehreren Abzugswalzen abgezogen, wobei sie abkühlt und sich verfestigt.

Die so erhaltene Folie wird dann im allgemeinen längs und quer zur Extrusionsrichtung gestreckt, was zu einer Orientierung der Molekülketten führt. In Längsrichtung wird vorzugsweise 4:1 bis 7:1 und in Querrichtung vorzugsweise 7:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 lang bei einer Temperatur von 100 bis 160 °C gehalten wird. Anschließend wird die Folie in üblicher Weise mit einer Aufwickeleinrichtung aufgewickelt. Es hat sich als besonders günstig erwiesen, die Abzugswalze oder -walzen, durch die die ausgepreßte Folie auch abgekühlt und verfestigt wird, bei einer Temperatur von 20 bis 90 °C zu halten.

Die Temperaturen, bei denen die Längs- und die Querstreckung durchgeführt werden, können variieren. Im allgemeinen wird die Längsstreckung vorzugsweise bei 100 bis 150 °C und die Querstreckung vorzugsweise bei 155 bis 190 °C durchgeführt.

Gegebenenfalls kann/können wie oben erwähnt nach der biaxialen Streckung eine oder beide Oberfläche/n der Folie nach einer der bekannten Methoden corona- oder flammbehandelt werden.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 bis 20 kV und 20 bis 40 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekü-len der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymereberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die Erfindung wird nun anhand von Ausführungsbeispielen noch näher erläutert.

### Beispiel 1

Es wurde durch Coextrusion und anschließende stufenweise Orientierung in Längs- und Querrichtung eine fünfschichtige Folie mit einer Gesamtdicke von 40 μm und einem DZBZD-Schichtaufbau hergestellt.

Die Folie wurde vor der Aufrollung auf der Walzenseite einer einseitigen Coronabehandlung unterzogen. Die Walzenseite ist diejenige Seite der Folie, mit der sie auf der ersten Abzugswalze aufliegt. Die Oberflächenspannung betrug auf dieser Seite infolge dieser Behandlung 39 bis 40 mN/m. Alle Schichten enthielten zur Stabilisierung 0,13 Gew.-% Pentaerythrityl-Tetrakis-4-(3,5-ditertiärbutyl-4-hydroxyphenyl)-propionat (®Irganox 1010) und als Neutralisationsmittel 0,06 Gew.-% Calciumstearat.

Die Basisschicht B bestand im wesentlichen aus einem Polypropylenhomopolymeren mit einem n-heptanlöslichen Anteil von 4 Gew.-% und einem Schmelzbereich von 160 bis 162 °C. Der Schmelzflußindex des Polypropylenhomopolymeren betrug 3,4 g/10 min bei 230 °C und 21,6 N Belastung (DIN 53 735). Die Basisschicht enthielt 0,12 Gew.-% Erucasäureamid mit einem Schmelzbereich von 78 bis 82 °C und 0,12 Gew.-% N,N-bis-Ethoxyalkylamin (®Armostat 300).

Die polyolefinischen Deckschichten D bestanden im wesentlichen aus einem Ethylen-Propylen-Buten-1-Terpolymeren mit einem Gehalt von 3,5 Gew.-% Ethylen, 88,5 Gew.-% Propylen und 8 Gew.-% Buten-1. Die Mindestsiegeltemperatur dieses Polymeren beträgt 106 °C. Die Deckschichten enthielten 0,33 Gew.-% eines keramischen, kugelförmigen Antiblockmittels mit einem mittleren Teilchendurchmesser von 2 μm. Die Dicke der Deckschichten betrug jeweils 0,1 μm.

Die Zwischenschichten Z bestanden im wesentlichen aus einem statistischen Propylen-Buten-1-Copolymeren (®Tafmer XR 110T) mit einem Propylengehalt von 74,3 Mol-% und einem Buten-1-Gehalt von 25,7 Mol-%, bezogen auf das Copolymere und mit einer Schmelztemperatur von 110,6°C und einer Rekristallisationstemperatur von 60°C. Die Mindestsiegeltemperatur des Copolymeren beträgt 75 °C. Die Dicke der Zwischenschichten betrug 1,5 μm.

Die Eigenschaften der Folien gemäß den Beispielen und Vergleichsbeispielen sind in der nachstehenden Tabelle zusammengefaßt. Es bedeuten

Klebeneigung der Folie bei der Herstellung

+:  Die Folie neigt nicht zum Verkleben
-:  Die Folie neigt zum Verkleben

Siegelverhalten der Folie bei der Verarbeitung

+: Die Folie zeigt ein Siegelverhalten, wie Folien, die nach dem Stand der Technik niedrigsiegelnd sind.

-: Das Siegelverhalten ist nicht ausreichend.

Es wurden die folgenden Vergleichsfolien zur Bestimmung der oben angegebenen Mindestsiegeltemperatur von Zwischenschicht- und Deckschichtpolymeren hergestellt:

**Beispiel 1a**

Es wurde durch Coextrusion und anschließende stufenweise Orientierung in Längs- und Querrichtung eine dreischichtige Folie mit einer Gesamtdicke von 40 µm und einem DBD-Schichtaufbau hergestellt.
Die Folie wurde vor der Aufrollung auf der Walzenseite einer einseitigen Coronabehandlung unterzogen. Die Walzenseite ist diejenige Seite der Folie, mit der sie auf der ersten Abzugswalze aufliegt. Die Oberflächenspannung betrug auf dieser Seite infolge dieser Behandlung 39 bis 40 mN/m. Alle Schichten enthielten zur Stabilisierung 0,13 Gew.-% Pentaerythrityl-Tetrakis-4-(3,5-ditertiärbutyl-4-hydroxyphenyl)-propionat (®lrganox 1010) und als Neutralisationsmittel 0,06 Gew.-% Calciumstearat.
Die Basisschicht B bestand im wesentlichen aus einem Polypropylenhomopolymeren mit einem n-heptanlöslichen Anteil von 4 Gew.-% und einem Schmelzbereich von 160 bis 162 °C. Der Schmelzflußindex des Polypropylenhomopolymeren betrug 3,4 g/10 min bei 230 °C und 21,6 N Belastung (DIN 53 735). Die Basisschicht enthielt 0,12 Gew.-% Erucasäureamid mit einem Schmelzbereich von 78 bis 82 °C und 0,12 Gew.-% N,N-bis-Ethoxyalkylamin (®Armostat 300).
Die polyolefinischen Deckschichten D bestanden im wesentlichen aus einem Ethylen-Propylen-Buten-1-Terpolymeren mit einem Gehalt von 3,5 Gew.-% Ethylen, 88,5 Gew.-% Propylen und 8 Gew.-% Buten-1. Die Deckschichten enthielten 0,33 Gew.-% eines keramischen, kugelförmigen Antiblockmittels mit einem mittleren Teilchendurchmesser von 2 µm. Die Dicke der Deckschichten betrug jeweils 0,7 µm.
Die Folie hat bei einer Siegelung von D gegen D eine Siegelanspringtemperatur von 106°C, die im Sinne der Erfindung als Mindestsiegeltemperatur des Terpolymeren gilt.

**Beispiel 1b**

Es wurde durch Coextrusion und anschließende stufenweise Orientierung in Längs- und Querrichtung eine dreischichtige Folie mit einer Gesamtdicke von 40 µm und einem DBD-Schichtaufbau hergestellt.
Die Folie wurde vor der Aufrollung auf der Walzenseite einer einseitigen Coronabehandlung unterzogen. Die Walzenseite ist diejenige Seite der Folie, mit der sie auf der ersten Abzugswalze aufliegt. Die Oberflächenspannung betrug auf dieser Seite infolge dieser Behandlung 39 bis 40 mN/m. Alle Schichten enthielten zur Stabilisierung 0,13 Gew.-% Pentaerythrityl-Tetrakis-4-(3,5-ditertiärbutyl-4-hydroxyphenyl)-propionat (®lrganox 1010) und als Neutralisationsmittel 0,06 Gew.-% Calciumstearat.
Die Basisschicht B bestand im wesentlichen aus einem Polypropylenhomopolymeren mit einem n-heptanlöslichen Anteil von 4 Gew.-% und einem Schmelzbereich von 160 bis 162 °C. Der Schmelzflußindex des Polypropylenhomopolymeren betrug 3,4 g/10 min bei 230 °C und 21,6 N Belastung (DIN 53 735). Die Basisschicht enthielt 0,12 Gew.-% Erucasäureamid mit einem Schmelzbereich von 78 bis 82 °C und 0,12 Gew.-% N,N-bis-Ethoxyalkylamin (®Armostat 300).
Die polyolefinischen Deckschichten D bestanden im wesentlichen aus einem statistischen Propylen-Buten-1-Copolymeren (®Tafmer XR 110T) mit einem Propylengehalt von 74,3 Mol-% und einem Buten-1-Gehalt von 25,7 Mol-%, bezogen auf das Copolymere und mit einer Schmelztemperatur von 110,6°C und einer Rekristallisationstemperatur von 60°C. Die Deckschichten enthielten 0,33 Gew.-% eines keramischen, kugelförmigen Antiblockmittels mit einem mittleren Teilchendurchmesser von 2 µm. Die Dicke der Deckschichten betrug jeweils 0,7 µm.
Die Folie hat bei einer Siegelung von D gegen D eine Mindestsiegeltemperatur von 75°C, die im Sinne der vorliegenden Erfindung als Mindestsiegeltemperatur des Copolymeren gilt.

**Beispiel 2**

Im Vergleich zu Beispiel 1 enthält die Basisschicht zusätzlich 5 Gew.-% Calciumcarbonat mit einer mittleren Teilchengröße von ca. 1,5 µm und ca. 5 Gew.-% Titandioxid vom Rutiltyp. Die Folie ist weiß/opak.

**Beispiel 3**

Im Vergleich zu Beispiel 2 hat die Folie auf der Basisschicht beidseitig weitere Zwischenschichten W. Es handelt sich jetzt um eine symmetrische siebenschichtige Folie mit einer Gesamtdicke von 40 μm und einem Schichtaufbau DZWBWZD. Für die weiteren Zwischenschichten W wurde das gleiche Polymere verwendet wie für die Basisschicht B, jedoch mit einem leicht erhöhten MFI von 4,5 g/10 min. Die Dicke der Zwischenschicht W beträgt 4 μm. Die Folie ist weiß/opak und hat ein glänzendes Aussehen.

Vergleichsbeispiel 1

Im Vergleich zu Beispiel 1 beträgt jetzt die Deckschichtdicke 0,5 μm. Das Verarbeitungsverhalten der Folie ist schlecht.

Vergleichsbeispiel 2

Im Vergleich zu Beispiel 1 fehlt jetzt die Deckschicht. Die Folie neigt bei der Herstellung zum Verkleben.

Vergleichsbeispiel 3

Im Vergleich zu Beispiel 1 beträgt jetzt die Mindestsiegeltemperatur der Deckschicht 90°C. Die Folie neigt bei der Herstellung zum Verkleben.
Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C gemessen.

Schmelzpunkt

DSC-Messung, Maximum der Schmelzkurve, Aufheizgeschwindigkeit 20 °C/min.

Bestimmung der Siegelanspringtemperatur der Polymeren

Zur Bestimmung der Siegelanspringtemperatur der Zwischenschicht- und der Deckschichtpolymeren werden Folien analog den erfindungsgemäßen Beispielen hergestellt, wobei jedoch diese Folien nur drei Schichten haben. Die Deckschichten bestehen im wesentlichen aus dem zu prüfenden Polymeren d.h. einmal aus dem Polymeren der Zwischenschichten des erfindungsgemäßen Beispiels und einmal aus dem Polymeren der Deckschicht des erfindungsgemäßen Beispiels. Die Deckschichten haben jeweils eine Dicke von etwa 0,7 μm. Die Siegelanspringtemperatur dieser Vergleichsfolien gilt als die Siegelanspringtemperatur des Polymeren.
Bestimmung der Mindestsiegeltemperatur (Siegelanspringtemperatur) der Folien Mit dem Siegelgerät HSG/ET der Firma Brugger werden heißgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 10 N/cm$^2$ und einer Siegeldauer von 0,5 s gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Mindestsiegeltemperatur ist die Temperatur, bei der eine Siegelnahtfestigkeit von mindestens 0,5 N/15 mm erreicht wird.

Siegelnahtfestigkeit

Zur Bestimmung wurden zwei 15 mm breite Folienstreifen übereinandergelegt und bei 130 °C, einer Siegelzeit von 0,5 s und einem Siegeldruck von 1,5 N/mm$^2$ (Gerät: Brugger Typ NDS, einseitig beheizte Siegelbacke) versiegelt. Die Siegelnahtfestigkeit wurde nach der T-Peel-Methode bestimmt.

Reibung

Die Reibung wurde in Anlehnung an DIN 53 375 bestimmt. Die Gleitreibungszahl wurde 14 Tage nach der Produktion gemessen.

Oberflächenspannung

Die Oberflächenspannung wurde mittels der sogenannten Tintenmethode (DIN 53 364) bestimmt.

Rauhigkeit

Die Rauhigkeit wurde nach DIN 4768 bei einem Cut-off von 0,25 mm bestimmt.

Trübung

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

TABELLE

| | Schichtaufbau | Mindestsiegeltemperatur in °C | | Deckschichtdicke µm | Zwischenschicht dicke µm | Klebeneigung der Folie bei der Herstellung | Siegelverhalten der Folie, bei der Verarbeitung |
|---|---|---|---|---|---|---|---|
| | | Deckschicht-polymer | Zwischenschicht-polymer | | | | |
| B1 | DZ BZ D | 106 | 75 | 0,1 | 1,5 | + | + |
| B2 | DZ BZ D | 106 | 75 | 0,1 | 1,5 | + | + |
| B3 | DZW BWZD | 106 | 75 | 0,1 | 1,5 | + | + |
| VB1 | DZ BZ D | 106 | 75 | 0,5 | 1,5 | + | - |
| VB2 | ZBZ | - | 75 | - | 1,0 | - | + |
| VB3 | DZ BZ D | 90 | 80 | 0,1 | 1,5 | - | + |

B: Beispiel
VB: Vergleichsbeispiel

**Patentansprüche**

1. Polyolefinische Mehrschichtfolie mit mindestens drei Schichten BZD, wobei B eine polyolefinische Basisschicht, Z eine Zwischenschicht und D eine auf der Zwischenschicht Z aufgebrachte Deckschicht D ist, **dadurch gekennzeichnet, daß** die Zwischenschicht mindestens 75 Gew.-%, bezogen auf die Zwischenschicht, siegelfähige Polyolefine und die Deckschicht D mindestens 75 Gew.-%, bezogen auf die Deckschicht D, siegelfähige Polyolefine enthält, wobei die Mindestsiegeltemperatur des Polyolefins der Deckschicht D mindestens 100 °C beträgt und größer als die Mindestsiegeltemperatur des Polyolefins der Zwischenschicht Z ist und die Dicke der Deckschicht D kleiner als 0,4 μm ist.

2. Mehrschichtfolie nach Anspruch 1, **dadurch gekennzeichnet, daß** das Polyolefin der Deckschicht eine Mindestsiegeltemperatur von 102 bis 150 °C und einen Schmelzflußindex von 3 bis 15 g/10 min hat.

3. Mehrschichtfolie nach einem der Ansprüche 1 und/oder 2, **dadurch gekennzeichnet, daß** das Polyolefin der Deckschicht
    ein Copolymer von
        Ethylen und Propylen oder
        Ethylen und Butylen-1 oder
        Propylen und Butylen-1 oder
    ein Terpolymer von
        Ethylen und Propylen und Butylen-1 oder
    eine Mischung oder ein Blend aus zwei oder mehreren der genannten Cound Terpolymeren ist.

4. Mehrschichtfolie nach einem oder mehreren der Ansprüche 1 bis 3, **dadurch gekennzeichnet, daß** die Dicke der Deckschicht kleiner als 0,3 μm, vorzugsweise kleiner als 0,2 μm beträgt.

5. Mehrschichtfolie nach einem oder mehreren der Ansprüche 1 bis 4, **dadurch gekennzeichnet, daß** das Polyolefin der Zwischenschicht eine Mindestsiegeltemperatur unterhalb von 95 °C, vorzugsweise unterhalb von 90 °C hat und einen Schmelzflußindex von 3 bis 15 g/10 min hat.

6. Mehrschichtfolie nach einem oder mehreren der Ansprüche 1 bis 5, **dadurch gekennzeichnet, daß** das Polyolefin der Zwischenschicht
    ein Copolymer von
        Ethylen und Propylen oder
        Ethylen und Butylen-1 oder
        Propylen und Butylen-1 oder
    ein Terpolymer von
        Ethylen und Propylen und Butylen-1 oder
    eine Mischung oder ein Blend aus zwei oder mehreren der genannten Cound Terpolymeren ist.

7. Mehrschichtfolie nach einem oder mehreren der Ansprüche 1 bis 6, **dadurch gekennzeichnet, daß** die Dicke der Zwischenschicht 0,2 bis 10 μm, vorzugsweise 0,5 bis 2 μm, beträgt.

8. Mehrschichtfolie nach einem oder mehreren der Ansprüche 1 bis 7, **dadurch gekennzeichnet, daß** die Deckschicht corona- oder flammbehandelt ist.

9. Mehrschichtfolie nach einem oder mehreren der Ansprüche 1 bis 8, **dadurch gekennzeichnet, daß** die Basisschicht auf der gegenüberliegenden Seite eine weitere Deckschicht aufweist.

10. Mehrschichtfolie nach einem oder mehreren der Ansprüche 1 bis 9, **dadurch gekennzeichnet, daß** die gegenüberliegende Deckschicht im wesentlichen aus einem siegelfähigen oder nicht siegelfähigen Polyolefin besteht.

11. Mehrschichtfolie nach einem oder mehreren der Ansprüche 9 und 10, **dadurch gekennzeichnet, daß** die Folie zusätzlich eine weitere Zwischenschicht aufweist.

12. Verfahren zur Herstellung einer mindestens dreischichtigen siegelfähigen Polyolefinfolie umfassend eine Basisschicht, eine Zwischenschicht und eine auf der Zwischenschicht aufgebrachte Deckschicht bei welchem die Polymeren oder die Polymermischung der einzelnen Schichten in einem Extruder komprimiert und verflüssigt werden, die den einzelnen Schichten der Folie entsprechenden Schmelzen gleichzeitig durch eine Flachdüse coextrudiert werden, die ausgepreßte mehrschichtige Folie auf einer oder mehreren Abzugswalzen abgezogen und abgekühlt wird, wobei sie sich verfestigt, und die so erhaltene Verfolie orientiert wird, **dadurch gekennzeichnet, daß** die Mindestsiegeltemperatur des Polyolefins der Deckschicht mindestens 100°C beträgt und größer als die Mindestsiegeltemperatur des Polyolefins der Zwischenschicht ist und die Dicke der Deckschicht kleiner als 0,4 µm ist.

13. Verfahren nach Anspruch 12, **dadurch gekennzeichnet, daß** die Folie biaxial orientiert wird wobei in Längsrichtung mit einem Verhältnis von 4:1 bis 7:1 und Querrichtung mit einem Verhältnis von 7:1 bis 11:1 gestreckt wird.

14. Verfahren nach Anspruch 12 und/oder 13, **dadurch gekennzeichnet, daß** die Längsstreckung bei einer Temperatur von 100 bis 150°C und die Querstreckung bei einer Temperatur von 155 bis 190°C durchgeführt wird.

15. Verwendung einer Polyolefinfolie nach einem oder mehreren der Ansprüche 1 bis 11 als Verpackungsfolie.

## Claims

1. Multilayer polyolefinic film having at least three layers BZD, where B is a polyolefinic base layer, Z is an interlayer and D is a top layer D applied to the interlayer Z, **characterized in that** the interlayer comprises at least 75% by weight, based on the interlayer, of heat-sealable polyolefins, and the top layer D comprises at least 75% by weight, based on the top layer D, of heat-sealable polyolefins, where the minimum heat-sealing temperature of the polyolefin of the top layer D is at least 100°C and is greater than the minimum heat-sealing temperature of the polyolefin of the interlayer Z, and the thickness of the top layer D is less than 0.4 µm.

2. Multilayer film according to Claim 1, **characterized in that** the polyolefin of the top layer has a minimum heat-sealing temperature of from 102 to 150°C and a melt flow index of from 3 to 15 g/10 min.

3. Multilayer film according to one of Claims 1 and/or 2, **characterized in that** the polyolefin of the top layer is
   a copolymer of
      ethylene and propylene or
      ethylene and 1-butylene or
      propylene and 1-butylene or
   a terpolymer of
      ethylene and propylene and 1-butylene or
   a mixture or blend of two or more of the said copolymers and terpolymers.

4. Multilayer film according to one or more of Claims 1 to 3, **characterized in that** the thickness of the top layer is less than 0.3 µm, preferably less than 0.2 µm.

5. Multilayer film according to one or more of Claims 1 to 4, **characterized in that** the polyolefin of the interlayer has a minimum heat-sealing temperature below 95°C, preferably below 90°C, and a melt flow index of from 3 to 15 g/10 min.

6. Multilayer film according to one or more of Claims 1 to 5, **characterized in that** the polyolefin of the interlayer is
   a copolymer of
      ethylene and propylene or
      ethylene and 1-butylene or
      propylene and 1-butylene or
   a terpolymer of
      ethylene and propylene and 1-butylene or
   a mixture or blend of two or more of the said copolymers and terpolymers.

7. Multilayer film according to one or more of Claims 1 to 6, **characterized in that** the thickness of the interlayer is from 0.2 to 10 µm, preferably from 0.5 to 2 µm.

8. Multilayer film according to one or more of Claims 1 to 7, **characterized in that** the top layer has been corona- or flame-treated.

9. Multilayer film according to one or more of Claims 1 to 8, **characterized in that** the base layer has a further top layer on the opposite side.

10. Multilayer film according to one or more of Claims 1 to 9, **characterized in that** the opposite top layer essentially consists of a heat-sealable or non-heat-sealable polyolefin.

11. Multilayer film according to one or more of Claims 9 and 10, **characterized in that** the film additionally has a further interlayer.

12. Process for the production of an at least three-layered heat-sealable polyolefin film comprising a base layer, an interlayer and a top layer applied to the interlayer, in which the polymers or polymer mixture of the individual layers are compressed and liquefied in an extruder, the melts corresponding to the individual layers of the film are coextruded simultaneously through a flat-film die, the extruded multilayer film is taken off and cooled on one or more take-off rolls, during which it solidifies, and the resultant film is oriented, **characterized in that** the minimum heat-sealing temperature of the polyolefin of the top layer is at least 100°C and is greater than the minimum heat-sealing temperature of the polyolefin of the interlayer, and the thickness of the top layer is less than 0.4 μm.

13. Process according to Claim 12, **characterized in that** the film is biaxially oriented, with the stretching in the longitudinal direction being carried out with a ratio of from 4:1 to 7:1 and the stretching in the transverse direction being carried out with a ratio of from 7:1 to 11:1.

14. Process according to Claim 12 and/or 13, **characterized in that** the longitudinal stretching is carried out at a temperature of from 100 to 150°C and the transverse stretching is carried out at a temperature of from 155 to 190°C.

15. Use of a polyolefin film according to one or more of Claims 1 to 11 as packaging film.

**Revendications**

1. Film multicouches en polyoléfine comprenant au moins trois couches BIS, B étant une couche de base en polyoléfine, I une couche intermédiaire et S une couche de surface appliquée à la couche intermédiaire I, **caractérisé en ce que** la couche intermédiaire contient au moins 75 % en poids, rapporté à la couche intermédiaire, de polyoléfines thermoscellables et la couche de surface S au moins 75 % en poids, rapporté à la couche de surface S de polyoléfines thermoscellables, la température de scellage minima de la polyoléfine de la couche de surface S étant au moins de 100 °C et plus élevée que la température de scellage minima de la polyoléfine de la couche intermédiaire I et l'épaisseur de la couche de surface D étant inférieure à 0,4 μm.

2. Film multicouches selon la revendication 1, **caractérisé en ce que** la polyoléfine de la couche de surface a une température de scellage minima de 102 à 150 °C et un indice de fluidité à chaud de 3 à 15 g/10 min.

3. Film multicouches selon l'une des revendications 1 et/ou 2, **caractérisé en ce que** la polyoléfine de la couche de surface est
    un copolymère
        d'éthylène et de propylène ou
        d'éthylène et de butylène-1 ou
        de propylène et de butylène-1 ou
    un terpolymère
        d'éthylène et de propylène et de butylène-1 ou
    un mélange ou un blend de deux ou de plusieurs des copolymères et des terpolymères cités.

4. Film multicouches selon l'une ou plusieurs des revendications 1 à 3, **caractérisé en ce que** l'épaisseur de la couche de surface est inférieure à 0,3 μm, de préférence inférieure à 0,2 μm.

5. Film multicouches selon l'une ou plusieurs des revendications 1 à 4, **caractérisé en ce que** le polyoléfine de la couche intermédiaire a une température de scellage minima au-dessous de 95 ° C, de préférence au-dessous de 90 ° C et un indice de fluidité à chaud de 3 à 15 g/10 min.

6. Film multicouches selon l'une ou plusieurs des revendications 1 à 5, **caractérisé en ce que** la polyoléfine de la couche intermédiaire est
    un copolymère
        d'éthylène et de propylène ou
        d'éthylène et de butylène-1 ou
        de propylène et de butylène-1 ou
    un terpolymère
        d'éthylène et de propylène et de butylène-1 ou
    un mélange ou un blend de deux ou de plusieurs des copolymères et des terpolymères cités

7.   Film multicouches selon l'une ou plusieurs des revendications 1 à 6, **caractérisé en ce que** l'épaisseur de la couche intermédiaire est comprise entre 0,2 et 10 μm, de préférence entre 0,5 et 2 μm.

8.   Film multicouches selon l'une ou plusieurs des revendications 1 à 7, **caractérisé en ce que** la couche de surface reçoit un traitement Corona ou à la flamme.

9.   Film multicouches selon l'une ou plusieurs des revendications 1 à 8, **caractérisé en ce que** la couche de base présente sur le côté opposé une autre couche de surface.

10.   Film multicouches selon l'une ou plusieurs des revendications 1 à 9, **caractérisé en ce que** la couche de surface sur le côté opposé consiste pour l'essentiel en une couche en polyoléfine scellable ou non scellable.

11.   Film multicouches selon l'une ou l'autre des revendications 9 et 10, **caractérisé en ce que** le film présente en plus une autre couche intermédiaire.

12.   Procédé pour la fabrication d'un film de polyoléfine thermoscellable en au moins trois couches qui comprend une couche de base, une couche intermédiaire et une couche de surface appliquée sur la couche intermédiaire, avec lequel les polymères ou le mélange polymère des différentes couches sont comprimés dans une extrudeuse et liquéfiés, les matières fondues correspondant aux différentes couches du film étant simultanément coextrudées à travers une filière plate, le film multicouches pressé étant débité sur un ou plusieurs rouleau(x) débiteur(s) et refroidi tout en se solidifiant et le film ainsi obtenu étant orienté, **caractérisé en ce que** la température de thermoscellage minima de la couche de surface est d'au moins 100 °C et plus élevée que la température de thermoscellage minima de la polyoléfine de la couche intermédiaire et l'épaisseur de la couche de surface est inférieure à 0,4 μm.

13.   Procédé selon la revendication 12, **caractérisé en ce que** le film est biaxialement orienté, l'étirage se faisant dans le sens longitudinal dans un rapport de 4 à 1 jusqu'à 7 à 1 et dans le sens transversal dans un rapport de 7 à 1 jusqu'à 11 à 1.

14.   Procédé selon la revendication 12 et/ou 13, **caractérisé en ce que** l'étirage longitudinal est pratiqué à une température de 100 à 150 °C et l'étirage transversal à une température de 155 à 190 °C.

15.   Utilisation d'un film de polyoléfine selon l'une ou plusieurs des revendications 1 à 11 en tant que film d'emballage.